Europäisches Patentamt

European Patent Office

Office européen des brevets

(11) Publication number:

**0 335 014**
**A1**

## EUROPEAN PATENT APPLICATION

(21) Application number: 88200584.6

(51) Int. Cl.⁴: **B29C 71/02**

(22) Date of filing: 28.03.88

(43) Date of publication of application:
04.10.89 Bulletin 89/40

(84) Designated Contracting States:
AT BE CH DE ES FR GB IT LI LU NL SE

(71) Applicant: STAMICARBON B.V.
Mijnweg 1
NL-6167 AC Geleen(NL)

(72) Inventor: Peerlkamp, Erik Rijkele
Klein Holtum 39
NL-6122 EG Born(NL)
Inventor: Derks, Wilhelmus Hubertus Petrus
van Hasseltkade 14e
NL-6211 CC Maastricht(NL)

(54) Moulded polyamide article.

(57) The invention relates to polyamide 4.6 moulded articles with an increased crystallinity of at least 30 J/g. At elevated temperature the articles show a torsion pendulum modulus which is more than twice the value for conventionally moulded polyamide 4.6 articles.

The impact resistance of the articles remains high.

FIG.1

# MOULDED POLYAMIDE ARTICLE

The invention is related to moulded articles comprising a polyamide mainly consisting of tetramethylene adipamide units with improved properties.

Moulded articles comprising a polyamide mainly consisting of tetramethylene adipamide units are known from EP-B-0038582. These moulded articles show superior properties over moulded articles comprising a polyamide consisting of polyamide 6 or 6.6, especially with respect to stiffness at elevated temperatures and impact resistance at low temperatures. However due to the ever increasing severeness of specifications related to, especially, applications at elevated temperature the moulded polyamide articles of EP-B-0038582 fall short in some instances.

Research has now been directed at moulded articles comprising a polyamide mainly consisting of tetramethylene adipamide units with further improved properties and to a process for the production of these moulded articles.

Finally one has found a polyamide mainly consisting of tetramethyleneadipamide units that in moulded articles shows superior properties.

The moulded article comprising a polyamide mainly consisting of tetramethylene adipamide units according to the invention is characterized in an increased crystallinity of the polyamide expressed as a first melting enthalpy which is at least 30 J per gram higher than the melting enthalpy, determined after subsequent solidification of the polyamide; the first melting enthalpy being determined on a sample of the moulded article by Differential Scanning Calorimetry (DSC) with a heating rate of $5°C/min$ and the second melting enthalpy being determined after the molten sample has been cooled at a rate of $5°C/min$. until below its crystallization temperature and after complete solidification has been reheated with a heating rate of $5°C/min$.

As during the DSC measurement a further condensation of the polyamide may occur, which may interfere with the determination of the melting enthalpy, the samples should be contained in a closed pressure vessel in which the condensation process and evaporation of the water produced by the polycondensation process are suppressed; otherwise too high values for the melting enthalpies are obtained. Still for low molecular, $\eta <$ about 2.5, weight samples aftercondensation during the DSC measurement may affect the value of $\Delta H_m$ and corrections should be made.

A moulded article is defined as an article that has been shaped from the molten state, for instance by injection molding, melt-extrusion, pressing or casting and does not include filaments and films.

Preferably the first melting enthalpy is at least 45 J/g higher than the second melting enthalpy, even more preferably the difference is at least 60 J/g.

The molecular weight of the polyamide, expressed as its relative viscosity, measured on 0.1 g solution in 100 ml 96% (wt) sulphuric acid at $25°C$, may vary between wide ranges, for instance $2.0 < \eta < 8$, and is merely determined by practical considerations such as minimum melt viscosity necessary for moulding.

The polyamide should substantially consist of tetramethyleneadipamide units, for instance at least 80%. A high content of copolymer units generally is not recommended as in that case the polyamide shows a more amorphous character, which results in a lower absolute level for the improved properties. However, if isomorphous groups, for instance, iso-phthalic and or polybutyleneterephthalic acid are introduced higher contents may be acceptable. Copolymer units can for instance be polyamide-forming units, for instance dicarboxylic acid groups, diamines and lactams, imide-forming and ester-forming groups.

The polyamide may contain additives, for instance stabilizers, flame retardants, reinforcing filler materials, for instance inorganic or organic fibers, mould release agents, colourants, pigments and other polymers.

Moulded articles comprising the polyamide according to the invention possess a very high stiffness, low creep, low water adsorption, better oxidative stability and environmental stress cracking resistance compared to the moulded polytetramethylene articles according to the state of the art.

Gaymans in Integration of fundamental polymer Science and Technology, Ed. L.A. Kleintjes. P.J. Lemstra: Proceedings of an international meeting on polymer science and technology, The Netherlands, 14-18 April 1985, pages 573-76, Elsevier Appl. Sc. Publ. New York, London 1987, shows examples of filaments and films of polyamide 4.6 that possess a high first melting enthalpy. From SAXS Gaymans concludes that crystallite growth is the reason for the increase in crystallinity. However increased crystallinity through crystallite growth has a very negative effect on impact resistance of polyamide articles and will lead to brittleness. This is clearly shown by T.J. Bessell et al. in Journal of Materials Science 10, 1137-1136 (1975), see for instance figure 4, in which the toughness of polyamide & decreases dramatically if the crystallinity increases by only 10%. Very surprisingly it has been found that the moulded polyamide articles with increased crystallinity according to the present invention do exhibit still very acceptable impact resistance; even with an increase in crystallinity of about 70 J/gram the Izod impact resistance, with a value of about 7 KJ/m², still remains better than that of other polyamides such as nylon 6.6 and 6. The torsion pendulum modulus at elevated temperature increases more than twofold with respect to articles according to the state of the art as for instance described in EP-B-0938582.

A method for the production of the moulded articles of the present invention consists of giving articles that have been obtained by shaping from the molten state, after solidification, a heat treatment at a temperature below the melting point.

More specifically the method for the production of moulded articles comprising a polyamide mainly consisting of tetramethylene adipamide units in which the polyamides first melting enthalpy is at least 30 Joule per gram higher than its melting enthalpy determined after subsequent solidification of the polyamide, consists of heating the moulded article, after it has been obtained by shaping from the molten state and subsequent solidification, at a temperature of between 220°C and the melting temperature of the polyamide.

The shaping of the article from the melt can be done by any method, for instance injection moulding, extrusion, pressing or casting.

The duration of the heat treatment may vary within wide limits and depends, inter alia, on the moulding conditions, the dimensions of the article and the temperature level of the heat treatment. For practical reasons the duration will usually be limited to 24 hours, whereas a heat treatment of less than 1/2 of an hour is usually not very effective.

There is little sense in applying temperatures below 220°C, because in that case it takes a long time for any effect of the treatment to become observable, whereas applying temperatures above the melting point of the polyamide may result in deformation of the article. Preferably the temperature is chosen between 240 and 285°C. The time of the treatment can be considerably shortened if in the process of moulding the article, the article is cooled from the melt with a rate of at least 40°C per minute; preferably the cooling rate is at least 100°C per minute. Also applying a hydrostatic pressure may further improve the velocity of the process.

As a side effect the molecular weight of the polyamide may increase during the heat treatment; however it will be shown that the increase in molecular weight has only minor influence on the unexpectedly high improvement of the properties of the polyamide.

This heat treatment should not be confused with the stress relieving of articles by means of heating at increased temperatures, mperatures are, however, generally considerably lower. This treatment is described in, for instance, US-A-3504077 and US-A-4455417. For polyamides such as nylon 6 and 6.6 these temperatures are generally less than about 180°C.

It may be advantageous to subject the article to the heat treatment according to the invention immediately after it has been moulded and before it has been cooled completely, so that only little heat needs to be added to bring the article to the temperatures required. The heat treatment is preferably given in an inert gas atmosphere which may contain an appreciable concentration of water vapour, for instance up to 50% by volume.

A further result of the heat treatment is that more homogeneous articles can be obtained. This is especially the case in thick-walled articles. However due to quenching, for instance in injection moulding, the surface layer of the treated articles may possess a very high crystallinity, which is a further unexpected advantage of the present invention.

The invention will now be further elucidated with the following examples without, however, being limited thereto.

If not further indicated, the following test methods have been used.

a. Determination of first and second melting enthalpy: Differential Scanning Calorimetry, (DSC), in a DSC2 of Perkin and Elmer on samples of about 8 mg in a closed pressure vessel. Heating and cooling rate 5°C/minute over a temperature range between 30 and 315°C.

b. Determination of melting points: peak temperatures from DSC as described under a.

c. Relative viscosity, $\eta$rel; on a solution of 0.1 gram in 100 ml 96% (wt) sulphuric acid at 25°C.

d. Torsion pendulum modulus $G'$ at frequency 0.2153 H₂ with a heating rate of l°C/minute.

e. Impact resistance IZOD ASTM 256.

Experiment 1

Test bars are injection moulded from STANYL TW 300®, a medium flow, $\eta_{rel}$ = 3.5, nylon 4.6 of DSM, The Netherlands. Temperature of the melt 310¤C, mould temperature 60¤C.

The test bars are given a heat treatment at 260¤C in a nitrogen atmosphere containing 10% (vol) water vapour. At different time intervals properties of the test bars are determined.

| | time (hrs) | $\eta$rel | ΔHm1 (J/gr) | ΔHm2 j/gr) | Tm1 ¤C | Tm2 ¤C | Izod |
|---|---|---|---|---|---|---|---|
| comp. example A | 0 | 3.4 | 78 | 81 | 290 | 288 | 10 |
| example 1 | 2 | 3.7 | 120 | 83 | 297 | 288 | |
| example 2 | 4 | 3.9 | 129 | 82 | 300 | 289 | 9.3 |
| example 3 | 20 | 4.5 | 152 | 84 | 311 | 288 | 7.7 |

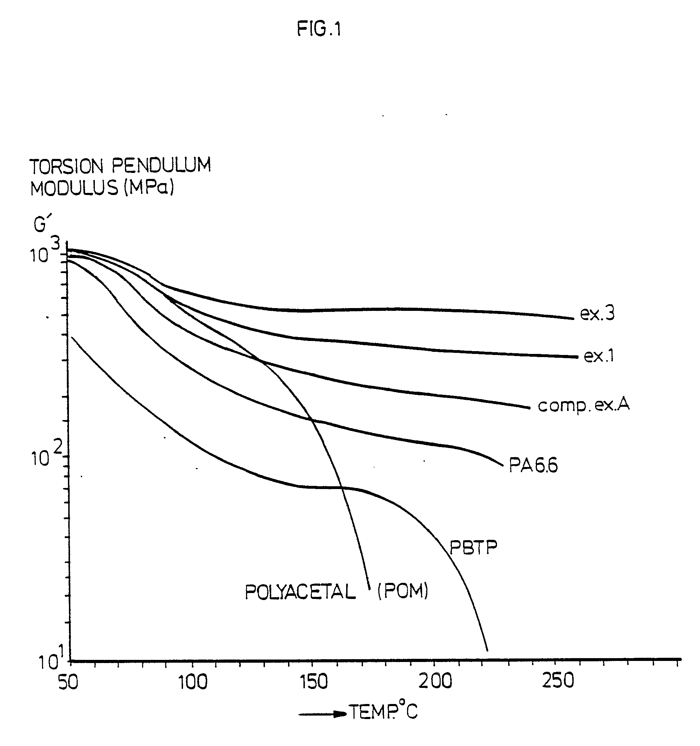

In figure 1 the stiffness (torsion pendulum modulus) as a function of temperature for the examples 1 and 3 is represented graphically. Comparative example A and the data for a number of other injection moulded thermoplastic materials are included in this figure. The data for the other thermoplastic materials are obtained from H.M.J.C. Creemers, Kunststof en Rubber, March 1985, p. 21-32, figure 1.

From this experiment it is clear that the nylon 4.6 samples with the high crystallinity according to the invention show an appreciable increase in torsion pendulum modulus compared to the sample in which the first and second melting enthalphy are of the same order. The impact resistance is only slightly influenced, despite the very appreciable increase in the melting enthalpy, which nearly doubles. Further it appears that the second melting enthalpy is nearly independent if the molecular weight $n_{rel}$ of the nylon 4.6, this is also the case for the second melting point.

Experiment 2 (Example 4 comp. ex. 2A)

Experiment 1 was repeated; however instead of STANYL TW300 a glassfibre filled (30 wt.%) nylon 4.6 grade was used.

Also in this case an article with very high crystallinity was obtained. After 4 hrs. heat treatment the following properties were measured.

ΔHm1 = 134 J/g (97)[*]

Tm1 = 292¤C (294) Izod = 10 KJ/m² (11)

G' (250¤C) = 1.0.10³ MPa (0.7.10³).

[*] numbers in brackets are values for untreated article (o hr.) (comp. ex. 2A)

Although the stiffness of glassfibre filled articles generally is mainly determined by the filler material, even in this case a considerable increase in stiffness is observed (about 40%).

Experiment 3 (Example 5 Comp. ex. 3A)

Tubing with an outside diameter of 7 mm and a wall thickness of 0.8 mm was extruded from polyamide 4.6, $\eta_{rel}$ = 3,8 (Cu stabilized). Part of the tubing received a heat treatment at 260¤C during 20 hrs. The mechanical strength of the tubing was tested by placing a defined length of tubing between two parallel plates and measurement of the displacement of the plates as a function of the force on the plates:

| | ΔHm1 (J/gr) | ΔHm2 (J/g) | Tm1 ¤C | Tm2 ¤C | displacement 25¤C (40N) | (mm) 120¤C (16N) |
|---|---|---|---|---|---|---|
| Comp. ex. 3A untreated | 78.4 | 80 | 286.5 | 288 | 0.19 | 0.34 |
| Example 5 treated | 157.6 | 82 | 310 | 289 | 0.15 | 0.18 |

It is clear that especially at elevated temperature the tubing with the polyamide 4.6 according to the invention shows a much better stiffness.

Experiment 4 (Example 6 Comp. ex. 4A)

Ball bearing cages, diameter about 6 cm., are injection moulded from polyamide 4.6, $\eta_{rel}$ = 3.3, containing 30% (wt) glassfibre and a heat stabilizer.

After injection moulding the ball bearing cages are subjected to a heat treatment at 260¤C for 20 hrs. The mechanical strength is determined in the same manner as in the case of the tubing (Experiment 3).

| | $\Delta Hm1$ (J/g) | $\Delta Hm2$ (J/g) | force needed for 0.2 mm. 25¤C | displacement 120¤C |
|---|---|---|---|---|
| Comp. example 4A untreated | 97.8 | | 5.6 | 2.4 |
| example 6 treated | 153 | | 7.0 | 3.4 |

Also in the case of this glass-filled article an improvement is obtained.

Exeriment 5 (example 7 comp. ex. 5A and 5B)

Thin-walled electric connectors are injection moulded from clay-filled (70 wt.%) polytetramethylene adipamide, the relative viscosity of which was 3.4 and 2.4, respectively.

For the moulding of the high molecular weight polyamide relatively high pressure and melt temperature was needed to obtain complete filling of the mould. The connector showed discoloration. $\eta_{rel}$ of the article was 2.9 (comp. example 5A)

In the case of the low molecular weight polyamide composition injection moulding was easy because of the good flow properties of the polyamide. However the connector obtained was very brittle and could easily be crushed by hand. $\eta_{rel}$ was 2.3 (comp. example 5B). The connector was given a heat treatment during 3 hours at 260¤C in a humid (10 vol %) nitrogen atmosphere (example 7). After the treatment the connector showed no brittleness. $\eta_{rel}$ had increased to 2.9. However the stiffness of this connector was much better than that of the connector of comparative example 5A.

After DSC it appeared that the first melting enthalpies were 128 J/g in the case of the heat-treated connector and 96 J/g in the case of comp. ex. 5A.

| | starting material | heat treatment | final product |
|---|---|---|---|
| Ex. 7 | $\eta$ = 2.4 | + | 2.9 good mech. strength |
| Comp. ex. 5B | $\eta$ = 2.4 | - | 2.3 low mech. strength |
| Comp. ex. 5A | $\eta$ = 3.4 | - | 2.9 difficult to mould discoloration |

Experiment 6

Test bars have been melt pressed from STANYL TW300®; however the mould has been cooled with different cooling rates. After solidification and cooling until a temperature of 100¤C had been reached, the articles were heated at 260¤C and kept at that temperature in a humid nitrogen atmosphere during a fixed period of time (2 hrs.)

Crystallinity for the different samples was determined by DSC.

| Cooling rate ¤C/min. | Δ Hm1 J/g |
|---|---|
| 5 | 98 |
| 40 | 106 |
| 160 | 153 |
| 320 | 157 |

It is clear that in the case of low cooling rates a much longer heat treatment is needed to obtain articles with the crystallinity of the present invention.

## Claims

1. Moulded polyamide articles mainly consisting of tetramethylene adipamide units, characterized in an increased crystallinity of the polyamide expressed as a first melting enthalpy which is at least 30 Joules per gram higher than the melting enthalpy determined after melting and subsequent solidifcation of the polyamide, the first melting enthalpy being determined on a sample of the moulded article by differential scanning calorimetry (DSC), with a heating rate of 5¤C per minute, and the second melting enthalpy being determined after the molten polyamide has been cooled with a cooling rate of 5¤C per minute until below its crystallinity temperature and after complete solidification has been reheated with a heating rate of 5¤C per minute.

2. Moulded polyamide article according to claim 1, characterized in that the first melting enthalpy is at least 45 Joules per gram higher than the melting enthalpy determined after melting and subsequent solidification.

3. Moulded polyamide article according to claim 1 or 2, characterized in that the relative viscosity of the polyamide is at least 2.0 (0.1 g in 100 ml 96 % (wt) sulphuric acid).

4. Moulded polyamide article according to any one of the claims 1-3, characterized in that the IZOD impact resistance at 25¤C is at least 6 KJ/m$^2$(dry as moulded).

5. Process for the preparation of the moulded polyamide article according to any one of the claims 1-4, characterized in that the polyamide article after moulding is given a heat treatment in an inert gas atmosphere at a temperature of between 220 and 290¤C during a period of time of between 0.25 and 24 hours.

6. Process according to claim 5, characterized in that the temperature is between 240 and 285¤C.

7. Process according to claim 6, characterized in that the inert gas atmosphere contains water vapour.

8. Process according to claim 5, characterized in that in the process of moulding the article, the article is cooled from the melt at a rate of at least 40¤per minute.

9. Process according to claim 8, characterized in that the cooling rate is at least 100¤C per minute.

FIG.1

TORSION PENDULUM
MODULUS (MPa)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | JP-A-61 047 813 <br> * Abstract * & DERWENT abstract 8616, 8th March 1986 | 5-9 | B 29 C 71/02 <br> C 08 J 7/08 |
| A | | 3 | |
| Y | DE-B-1 229 278 (SIEMENS) <br> * Column 1, lines 11-17,43-46 * | 5-9 | |
| A | | 4 | |
| A | JP-A-61 124 622 <br> * Abstract * & DERWENT abstract 8630, 12th June 1986 | 1-4 | |
| A | INTERNATIONAL POLYMER SCIENCE AND TECHNOLOGY, vol. 4, no. 10, October 1977, pages T/44,T/45; A.M. AR'EV: "Selection of conditions of annealing of polyamides" | 1,5,6 | |
| X | DE-B-1 258 598 (BASF) <br> * Column 1, lines 1-36 * | 5-7 | TECHNICAL FIELDS SEARCHED (Int. Cl.4) |
| A | | 1,2 | B 29 C <br> C 08 J <br> C 08 G |
| A | AT-B- 369 771 (VOEST-ALPINE AG) <br> * Page 2, lines 42-55; page 3, lines 1-5; claims 4,5 * | 1,8,9 | |

The present search report has been drawn up for all claims

| Place of search | Date of completion of the search | Examiner |
|---|---|---|
| THE HAGUE | 28-11-1988 | WEINBERG J.J.M. |

EPO FORM 1503 03.82 (P0401)